# EUROPÄISCHE PATENTSCHRIFT

(11) **EP 1 214 156 B1**
(45) Veröffentlichungstag und Bekanntmachung des Hinweises auf die Patenterteilung: **28.04.2004**
(21) Anmeldenummer: 00967714.7
(22) Anmeldetag: 20.09.2000
(51) Int. Cl.: B07B 13/07

(54) **SORTIERANORDNUNG FÜR PARTIKEL UNTERSCHIEDLICHER GRÖSSENAUSDEHNUNG**
SORTING DEVICE FOR PARTICLES OF DIFFERING SIZES
DISPOSITIF DE TRI DE PARTICULES DE TAILLES DIFFERENTES

(30) Priorität: 20.09.1999 DE 19945038
(43) Veröffentlichungstag der Anmeldung: 19.06.2002
(73) Patentinhaber: Exner, Hubertus, D-38667 Bad Harzburg (DE)
(72) Erfinder: Exner, Hubertus, D-38667 Bad Harzburg (DE)
(74) Vertreter: Einsel, Martin
(86) Internationale Anmeldenummer: PCT/EP2000/009180
(87) Internationale Veröffentlichungsnummer: WO 2001/021512

(56) Entgegenhaltungen:
- EP-A- 0 849 006
- FR-A- 974 980
- US-A- 3 799 336
- US-A- 4 627 541
- US-A- 5 558 199

## Beschreibung

Die Erfindung betrifft eine Sortieranordnung für Partikel unterschiedlicher Größenausdehnung mit wenigstens zwei Fördermitteln, denen stromaufwärtig die zu sortierenden Partikel zugeführt werden, wobei zwischen wenigstens zwei in Förderrichtung aufeinanderfolgenden Fördermitteln eine Höhenabstufung der Förderebenen vorgesehen ist.

Für die reine Förderung von Partikeln unterschiedlicher Größenausdehnung sind derartig in Förderrichtung hintereinander angeordnete Fördermittel mit einer Höhenabstufung der Förderebenen bekannt. Beispielsweise in einer aus der DE 196 17 187 A1 bekannten Anlage werden Schüttgüter über Förderbänder transportiert, bei denen am Übergang von einem Förderband auf das nächste eine Überlappung vorgesehen ist, so dass das Fördergut auf die tieferliegende Ebene des stromabwärtigen Förderbandes zum Weitertransport fällt. Eine Sortierung ist dabei nicht bekannt.

In der DE 37 29 784 A1 wird ein Transportsystem für Werkstücke auf Trägern vorgeschlagen. Zwei Förderbänder folgen dabei aneinander. Ein komplizierter Mechanismus taktet und transportiert dabei die Werkstücke in diskreten Abständen.

Um ähnlich geformte, aber unterschiedlich große Objekte wie beispielsweise Fische nach Größe zu sortieren, schlägt die FR-PS 974980 mehrere hintereinander angeordnete Transportbänder mit Abständen zwischeneinander vor, durch die jeweils zu kleine Fische hindurchfallen.

Ferner sind Sortieranordnungen bekannt, bei denen die zu sortierenden Partikel über eine Höhenabstufung geführt werden, wobei dann im freien Fall der Partikel eine Windsichtung erfolgt. Dabei ist jedoch nachteilig, dass insbesondere bei unterschiedlicher Größenausdehnung der zu sortierenden Partikel eine vorhersehbare Aufteilung nicht möglich ist.

Für sehr kleine Partikel untereinander gleicher Größenordnung schlägt die US-PS 5 305 893 vor, auf einem Förderband eine Detektion von Fremdkörpern insbesondere in einem Tabakstrom vorzunehmen. Am Ende des Förderbandes wird ein luftbetätigter Kolben in Abhängigkeit davon ausgefahren und wirft Fremdkörper mitsamt benachbarter Partikel aus dem Strom. Für verschieden große zu sortierende Partikel ist diese Anordnung nicht geeignet.

Insbesondere bei der Aufbereitung von Papierabfällen, beispielsweise aus Altpapiercontainem, besteht das Problem, dass kleinere Fremdpartikel, beispielsweise Steine, Glasscherben, Flaschenverschlüsse u. dgl. in diesen Altpapiermengen enthalten sind. Da jedoch das Altpapier in den Papierfabriken in großen Zentrifugen in Flüssigkeiten eingemaischt und aufgelöst wird, um die Entfernung der Druckfarben durchzuführen und das Altpapier wieder in aufbereitetes Papier umzuwandeln, rufen Fremdbestandteile, wie Steine, Scherben und andere harte kleine Partikel schwere Schäden hervor, insbesondere wenn die Fremdpartikel vom Rührwerk gegen die Zentrifugenwände gerieben werden.

Eine Abtrennung dieser Fremdbestandteile durch bekannte Siebanordnungen zu erreichen, scheitert an der schlechten Transportfähigkeit des Papiers über Siebe und führt zu Verstopfungen.

Daher sind auch siebähnlich aufgebaute Anordnungen wie beispielsweise in der US-PS 4 627 541 nicht für solche Sortierungen gedacht. Dort arbeiten viele hintereinander angeordnete drehbare Walzen jeweils mit Abstand zueinander, um landwirtschaftliche Erzeugnisse (etwa Kartoffeln) der Größe nach zu sortieren, zu kleine Kartoffeln fallen zwischen den Walzen hindurch.

In einem Vorschlag nach der US-PS 3 799 336 laufen längliche, ähnliche Objekte über einen Rütteltisch, in dem siebartige Ausnehmungen vorgesehen sind, um Objekte bestimmter Länge auszusondern. Auch diese Siebkonzeption ist nicht für Papier vorgesehen.

Die EP 0 849 006 A2 schlägt eine Sortieranordnung für Papierabfälle vor. Dort ist eine Vielzahl von hintereinander angeordneten, mit unregelmäßig geformten Scheiben versehenen drehbaren Walzen mit horizontal verlaufenden Drehachsen vorgesehen. Durch die unregelmäßig geformten Scheiben können Fremdteilchen nach unten durchfallen. Mehrere aufeinanderfolgende Walzen bilden Teilförderstrecken. Zwei Teilförderstrecken besitzen eine Höhenabstufung ihrer Förderebenen, um ein Überkippen der Papierabfälle zu ermöglichen und so eine Neuorientierung zueinander zu ermöglichen.

Bei den eingangs genannten Windsichtern besteht bei Materialkombinationen das Problem, dass Pappkartons und Zeitungen etc. mit relativ großer Flächenausdehnung sich im Windstrahl unkontrolliert und unvorhersehbar verhalten und folglich eine zuverlässige Auftrennung nicht möglich ist. Dabei treten diese Probleme allgemein bei zu trennenden Partikeln unterschiedlicher Größenausdehnung, die beispielsweise flächig ausgebildet sind, auf.

Eine manuelle Sortierung ist ebenfalls erschwert, da gerade die vorgenannten kleinen Fremdkörper, wie Glasscherben, Kronkorken und Steine dazu neigen, sich in größeren Papierbergen zu verbergen, anzuhaften und/oder von diesen mitgenommen zu werden.

Aufgabe der Erfindung ist es daher, eine Sortieranordnung für Partikel unterschiedlicher Größenausdehnung anzugeben, bei der auch große flächige Partikel von kleinen Fremdpartikeln getrennt werden können.

Gelöst wird diese Aufgabe mit einer Sortieranordnung für Partikel unterschiedlicher Größenausdehnung mit wenigstens zwei Fördermitteln, denen stromaufwärtig die zu sortierenden Partikel zugeführt werden, bei der zwischen wenigstens zwei in Förderrichtung aufeinanderfolgenden Fördermitteln eine Höhenabstufung der Förderebenen vorgesehen ist, bei der zwischen den aufeinanderfolgenden Fördermitteln ein horizontaler Abstand bzw. Spalt vorgesehen ist und bei der wenigstens eines der beiden aufeinanderfolgenden Fördermittel ein Förderband ist.

Durch das Vorsehen eines horizontalen Abstandes oder Spaltes in einer hintereinander angeordneten, abgestuften Fördermittelkette wird überraschend eine wirksame und störunanfällige Sortiermöglichkeit für Partikel unterschiedlicher Größenausdehnung, mit insbesondere großen flächigen Teilen, bereitgestellt. Die Spaltweite wird dabei so gewählt, dass kleinere Partikel nicht auf das stromabwärtige Fördermittel gelangen, sondern durch den Spalt hindurchfallen. Großflächigere Teile hingegen überbrücken den Spalt. Beispielsweise überkippen die mittels der stromaufwärtigen Fördermittel angeförderten Produkte am Ende des Fördermittels und fallen auf das stromabwärtige Fördermittel. Dort werden sie mit dem stromabwärtigen Fördermittel abgefördert. Bei einer derartigen Anordnung sind Verstopfungen auszuschließen.

Eine derartige Spalttrennung kann durch mehrere derart angeordnete verkettete Fördermittel mehrfach durchgeführt werden. Durch die Aneinanderreihung mehrerer Spalttrennschnitte mit unterschiedlichem horizontalen Abstand ist eine Trennung des Ausgangsmaterials nach mehreren Fraktionen in einem Durchlauf möglich.

Wenn das stromabwärtige Fördermittel der aufeinanderfolgenden Fördermittel eine höhere Fördergeschwindigkeit als das stromaufwärtige Fördermittel aufweist, werden die das stromabwärtige Fördermittel erreichenden Partikel in ihrer Packungsdichte auseinandergezogen, womit gegebenenfalls zwischen diesen eingeklemmte kleinere Partikel freigegeben werden.

Um die Sortieranordnung schnell an unterschiedliche Materialien und/oder eine andere Fraktionstrennung umstellen zu können, sind Mittel zum Einstellen der Weite des horizontalen Abstandes vorgesehen. Da auch die Höhenabstufung Einfluss auf das Trennergebnis hat, sind bevorzugt ebenfalls Mittel zum Einstellen der Höhenabstufung vorgesehen.

Dadurch, dass zwischen zwei in Förderrichtung aufeinanderfolgenden Fördermitteln innerhalb der Abstufung und des Spalts wenigstens eine in Förderrichtung drehangetriebene Trommel mit einer Drehachse im wesentlichen senkrecht zur Förderrichtung und im wesentlichen parallel zu den Förderebenen angeordnet ist, wird eine alternative Ausgestaltung der Spalttrennanordnung angegeben, bei der insbesondere, wenn die Drehachse der Trommel im wesentlichen horizontal in Förderrichtung einstellbar ist, eine einfache Einstellbarkeit der Spaltbreite erreicht wird. Die beiden an den Spalt angrenzenden Fördermittel benötigen dann keine Einstellmöglichkeit und können kostengünstig ortsfest ausgeführt werden.

Mit den vorgenannten Einstellmöglichkeiten gemäß Anspruch 3, 4 und/oder 6 können somit unterschiedliche Materialien, wie beispielsweise Papier, Holz, Metalle, Pappe, Kunststoffe etc., ohne zeit- und kostenaufwendige Umrüstungen sortiert bzw. getrennt werden. Ein Wechsel von Sieben o. dgl. oder Umbauten bei Veränderung des Trennschnittes sind nicht erforderlich. Der erfindungsgemäße Spalttrennschnitt kann stufenlos auf die gewünschte Fraktionstrennung eingestellt werden.

Werden Förderbänder als Fördermitteln verwendet, wird ein besonders ruhiger und geräuscharmer Lauf der Anordnung erreicht. Bei der Verwendung von Rüttelförderern wird beim Fördervorgang eine Auflockerung des aufzutrennenden Materials erreicht.

Dadurch, dass ein zu einem Spaltabstand gerichtetes Ende des Förderbandes eine Umlenkrolle mit einem Durchmesser hat, der kleiner gleich der Größendimension der auszusortierenden Partikel ist, wird eine sehr scharfe Umlenkung des Förderbandes am Spalttrennschnitt erreicht, so dass das Überkippen der auf der Förderebene aufliegenden Partikel schwerkraftbedingt spontan im wesentlichen unbeeinflusst der Krümmung der Förderbandumlenkung erfolgt, sobald der Schwerpunkt des Partikels nicht mehr auf der Förderebene aufliegt. Ähnliches gilt für das Auftreffen der zu sortierenden Partikel auf die stromabwärtige Förderebene. Der Partikel stellt im wesentlichen ab einer bestimmten Flächendimensionierung ein Überbrücken des Spaltes sicher. Aufgrund der scharfen Umlenkung erfolgt kaum ein zufälliges Weiterfördern eines auf die Krümmung des umgelenkten Förderbandes am stromaufwärtigen Ende des zweiten Förderbandes fallenden Partikels.

Zum Auffangen der aussortierten kleinen Partikel, die durch den Spalt herunterfallen, ist unterhalb des horizontalen Abstandes ein Sammelbehälter angeordnet. Alternativ wird zum Abfördern der aussortierten kleinen Partikel an dieser Stelle ein weiteres Fördermittel, beispielsweise ein Förderband oder Rüttelförderer, angeordnet. Die aussortierten kleinen Partikel können dann einer Weiterverarbeitung, beispielsweise auch weiterer Trennverfahren zugeführt werden.

Wenn unterhalb des horizontalen Abstandes oder stromabwärtig des weiteren Fördermittels eine Windsichtungsvorrichtung vorgesehen ist, wird die aussortierte Fraktion kleiner Partikel weiter aufgetrennt. Bei der Verwendung der Sortieranordnung für Altpapier würden kleine Papierpartikel zusammen mit den unerwünschten kleinen Fremdkörpern, wie Glasscherben, Kronkorken, Steine etc. durch den horizontalen Spalt hindurchfallen und von der Windsichtungsvorrichtung aufgrund des unterschiedlichen Eigengewichtes zuverlässig aufgetrennt werden. Im Gegensatz zu großflächigen Papier- oder Pappeteilen verhalten sich kleine Papierpartikel oder Papierschnipsel in einer Windsichtungsvorrichtung vorhersehbar, so dass ein gutes Trennergebnis erzielt werden kann. Die aufgetrennte Fraktion kleiner Papierpartikel (Schnipsel) wird dann bevorzugt der Papieraufbereitungsanlage zugeführt.

Dadurch, dass eine Vorrichtung zum Wenden der größeren Partikel im Förderstrom vorgesehen ist, werden auf oder zwischen großflächigen Partikeln liegende kleine Partikel vereinzelt und beim nächsten Spalttrennschnitt sicher getrennt. Bevorzugt wird dabei das Material durch eine Stufenanordnung gewendet.

Mit der erfindungsgemäßen Sortiervorrichtung können Partikel unterschiedlicher Größenausdehnung, mit hoher Sortiergüte getrennt werden. insbesondere große flächige Partikel können von kleinen Fremdpartikeln getrennt werden. In Recyclingprozessen, wie beispielsweise der Altpapierverwertung, kann somit eine erhebliche Verringerung des manuellen Sortieraufwandes erreicht werden.

Zudem werden Schäden an den Anlagen zur Altpapierherstellung vermieden.

Praktische Versuche haben bereits ergeben, dass die erfindungsgemäße Sortieranordnung über diesen Anwendungszweck hinaus auch auf Vielzahl weiterer Gemenge und Stoffe und Mischungen davon anwendbar ist. So können z. B. auch Stoffe wie Holz, Glas, Kunststoffe, Metalle und die aus diesen hergestellte Produkte bearbeitet werden.

Eine Anordnung mehrerer, jeweils durch Abstände voneinander getrennter Fördermittel hintereinander bringt weitere Möglichkeiten. Dabei können solche Sortieranordnungen bereits aus Förderbändern von zwei unterschiedlichen Typen aufgebaut werden.

Nachfolgend werden vier Ausführungsbeispiele der Erfindung anhand der beiliegenden Zeichnungen detailliert beschrieben.

Darin zeigt:
- Fig. 1: in schematisierter räumlicher Ansicht eine Sortieranordnung mit Förderbändem,
- Fig. 2: eine zweite Ausführungsform der Sortieranordnung in schematisierter, räumlicher Ansicht mit einem Rüttelförderer zur Zufuhr des zu sortierenden Materials,
- Fig. 3: eine schematisierte räumliche Ansicht einer Sortieranordnung mit zwei Spalttrennschnitten und
- Fig. 4: in schematisierter räumlicher Ansicht ein weiteres Ausführungsbeispiel der Sortieranordnung mit einer zusätzlichen Trommel im Spaltbereich.

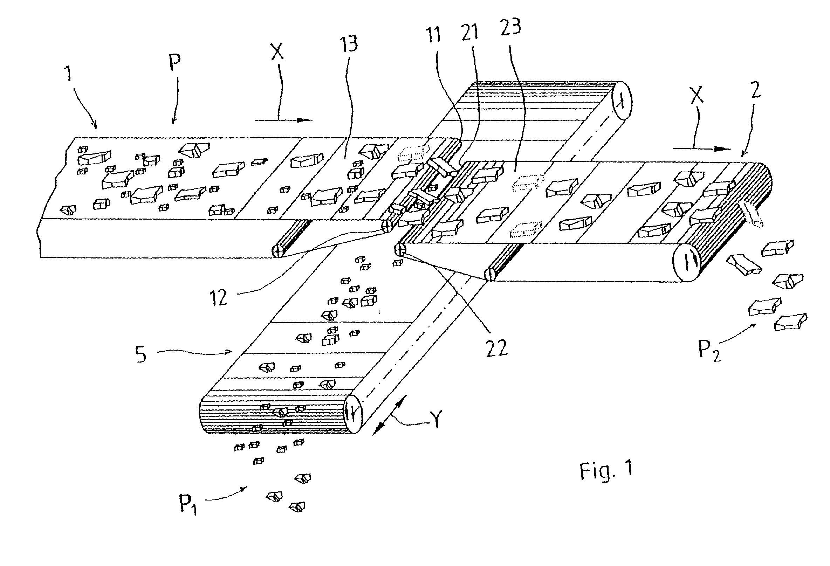

In Fig. 1 ist in schematisierter räumlicher Ansicht eine Sortieranordnung mit drei Förderbändern 1, 2, 5 dargestellt. Das im Förderstrom erste Förderband 1 weist am stromabwärtigen Ende eine Förderbandumlenkrolle 12 mit geringem Durchmesser auf, so dass eine scharfe Umlenkkante an diesem Ende 11 entsteht.

In Förderrichtung X nachgeschaltet ist höhenabgestuft um Höhe H zur Förderebene 13 des ersten Förderbandes 1 ein zweites Förderband 2 angeordnet. Das stromaufwärtige Ende 21 des Förderbandes 2 weist ebenfalls eine Umlenkrolle 22 mit geringem Durchmesser auf, um an dieser Stelle eine möglichst scharfe Krümmung des Förderbandes zu erreichen. Neben der Höhenabstufung H der beiden aufeinanderfolgenden Förderebenen 13, 23 der beiden Förderbänder 1, 2 ist erfindungsgemäß ein horizontaler Abstand A zwischen dem stromabwärtigen Ende 11 des ersten Förderbandes 1 und dem stromaufwärtigen Ende 21 des Förderbandes 2 ausgebildet.

Unterhalb des Übergangs von Förderband 1 auf Förderband 2, also unterhalb des horizontalen Abstandes oder Spaltes A, ist ein weiteres Fördermittel 5 zur Abförderung von durch den Spalt hindurchfallenden Partikeln vorgesehen. Das Fördermittel 5 ist als Förderband ausgebildet und hat eine Förderrichung Y, die im wesentlichen senkrecht zur Förderrichtung X ausgerichtet ist. Das Förderband 5 ist wählbar in beiden Richtungen drehangetrieben.

Nachfolgend wird die Funktionsweise beschrieben. Zu sortierende Partikel P werden dem Förderband 1 zugeführt und befinden sich auf der Förderebene 13, wie in Fig. 1 dargestellt. Am stromabwärtigen Ende 11 des ersten Förderbandes 1 kippen die Partikel P über die relativ scharfe Umlenkrollenkante und fallen je nach Verhältnis ihrer Größenausdehnung zur Höhenabstufung H und dem horizontalen Abstand A auf die Förderebene 23 unmittelbar am stromaufwärtigen Ende 21 des zweiten Förderbandes 2 oder durch den horizontalen Abstand (Spalt) A hindurch auf das weitere Förderband 5. Dabei überbrücken die Partikel P₂ mit größerer Flächenausdehnung den Spalt, wohingegen die Partikel P₁ mit kleinerer Größenausdehnung auf das Förderband 5 hindurchfallen.

Der zu sortierende Partikelstrom P wird somit in einen weiter beförderten Partikelstrom P₂ aus Partikeln mit großer Flächenausdehnung und einen Partikelstrom P₁ mit kleiner Größenausdehnung aufgetrennt. Um das Trennergebnis an unterschiedliche Materialien und/oder einen anderen gewünschten Trennschnitt anzugleichen, ist bevorzugt wenigstens eine der beiden hintereinander angeordneten Förderbänder 1, 2 in der Höhe und in Förderrichtung X verstellbar angeordnet. Somit ist es möglich, die Höhenabstufung H und den horizontalen Spaltabstand A stufenlos zu verstellen. So kann beispielsweise die Anlage für die Trennung von Altpapier umgerüstet werden auf die Trennung von Kunststoffteilen, bei denen beispielsweise Folien, Piastiktüten oder auch Luftpolsterverpackungsmaterial von leeren Joghurtbechern und Plastikkleinteilen etc. getrennt werden.

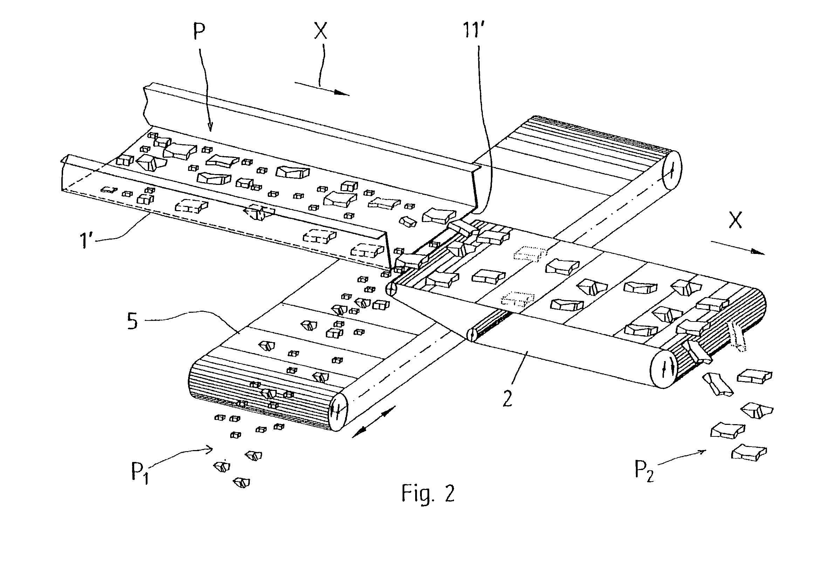

In Fig. 2 ist eine zur Ausgestaltung gemäß Fig. 1 alternative Ausführungsform der Erfindung mit einem Rüttelförderer 1' als das die zu sortierenden Partikel P zuführendes Fördermittel ausgebildet. Bei dem Rüttelförderer 1' ist die stromabwärtige Kante 11' entsprechend dem stromabwärtigen Ende 11 des Förderbandes 1 gemäß Ausführungsbeispiel der Fig. 1 mit einer entsprechenden Höhenabstufung H oberhalb der Förderebene 23 und mit horizontalem Abstand A zum stromaufwärtigen Ende 21 des Förderbandes 2 angeordnet.

Die weiteren Bestandteile der Anordnung entsprechend dem eingangs genannten Ausführungsbeispiel und weisen übereinstimmende Bezugszeichen auf. Die Funktionsweise entspricht ebenfalls dem vorgenannten Beispiel.

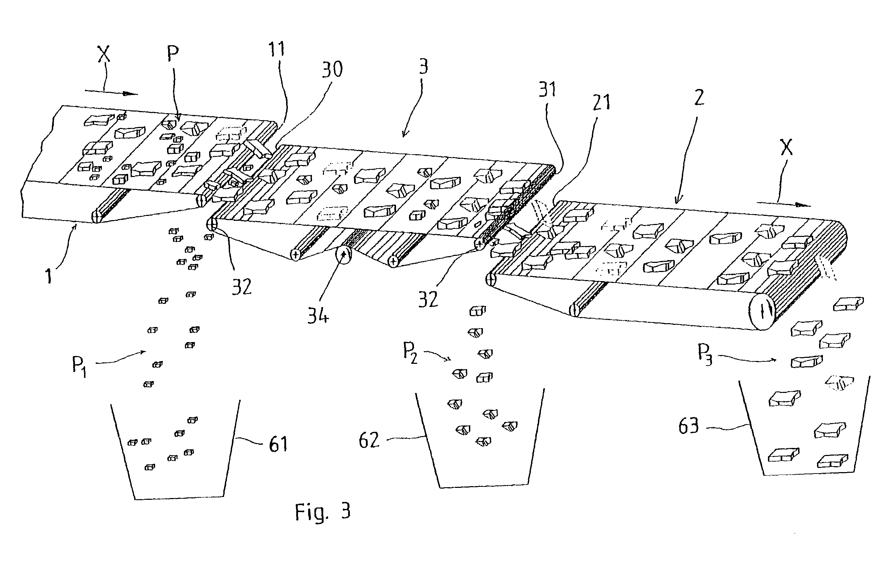

In Fig. 3 ist in schematisierter räumlicher Ansicht eine Sortieranordnung mit zwei Spalttrennschnitten dargestellt. Zwischen dem stromaufwärtigen Förderband 1 und dem stromabwärtigen Förderband 2 entsprechend dem Ausführungsbeispiel gemäß Fig. 1 ist ein drittes Förderband 3 angeordnet. An beiden Enden 30, 31 sind Umlenkrollen 32 mit geringem Durchmesser angeordnet, so dass sich ein Förderband mit "doppelter Messerkante" bildet. Der Antrieb des Förderbandes erfolgt über einen Mittelantrieb 34.

Zwischen der Förderebene 13 des ersten Förderbandes 1 und der Förderebene 33 des Mittelförderbandes 3 ist eine Höhenabstufung H₁ ausgebildet. Ferner ist zwischen dem stromabwärtigen Ende 11 des Förderbandes 1 und dem stromaufwärtigen Ende 30 des Mittelförderbandes 3 ein horizontaler Abstand A₁ vorgesehen. Zwischen der Förderebene 33 des Mittelförderbandes 3 und der Förderebene 23 des Förderbandes 2 ist eine weitere Höhenabstufung H₂ sowie zwischen stromabwärtigem Ende 31 und stromaufwärtigem Ende 21 ein horizontaler Abstand A₂ ausgebildet.

Die zu sortierenden Partikel P, die über Förderband 1 zugeführt werden, fallen von der Förderebene 13 auf die beabstandete und höhenabgestufte Förderebene 33 des Förderbandes 3, wobei Partikel mit kleiner Größenausdehnung P₁ durch den Spalt A₁ in einen schematisch dargestellten Sammelbehälter 63 fallen. Die auf dem Förderband 3 weiter beförderte Fraktion von Partikeln größerer Flächenausdehnung erreicht nun den nächsten Spalttrennschnitt, wobei hier nur die Partikel P₃ mit großer Flächenausdehnung auf die Förderebene 23 des Förderbandes 2 gelangen. Die Partikel P₂ mittlerer Größenausdehnung fallen durch den Spalt A₂ in einen darunter angeordneten Sammelbehälter 62. Die weiter beförderten Partikel P₃ großer Flächenausdehnung gelangen über Förderband 2 in einen Sammelbehälter 61. Alternativ zu den Sammelbehältern 61, 62, 63 können auch Fördermittel zum Abfördern der aufgetrennten Fraktionen, beispielsweise zur Weiterverarbeitung, vorgesehen werden.

Bei einer derartigen Anordnung steigen der horizontale Abstand und die Höhenabstufung in Förderrichtung X von Spalttrennschnitt zu Spalttrennschnitt an. Im dargestellten Ausführungsbeispiel ist A₁ < A₂ und H₁ < H₂.

Das Ausführungsbeispiel aus Figur 3 kann aufgebaut werden durch zwei identische, aber antisymmetrisch angeordnete Förderbänder, die dann das Förderband 1 und das Förderband 2 bilden. Diese beiden Förderbänder besitzen dann jeweils nur an einem Ende eine Umlenkrolle mit geringem Durchmesser, gewissermaßen einer Rollenkante.

Das mittlere Förderband 3 ist von einem anderen Typ und besitzt auf beiden Enden Umlenkrollen 32 mit geringem Durchmesser. Von diesem Typ können auch mehrere Förderbänder nacheinander zwischen das Förderband 1 und das Förderband 2 geschaltet werden, wobei sich dann jeweils Spalttrennschnitte mit Höhenabstufungen ausbilden. Dadurch, dass im Wesentlichen nur zwei unterschiedliche Typen solcher Förderbänder mit entsprechenden zusätzlichen Bauteilen (Motor, Getriebe, Umlenkrollen usw.) benötigt werden, ist mit verhältnismäßig geringem Herstellungsaufwand eine Vielzahl unterschiedlicher Sortieranordnungen für verschiedene Anwendungsfälle erzielbar.

Der zum Antrieb der Förderbänder verwendete Getriebemotor kann auch mit integrierten oder externen Frequenzumrichtern ausgerüstet werden. Dadurch kann bei gleichzeitiger Beobachtung des Stoffstromes und des sich einstellenden Trenneffektes auch eine Regelung der Bandgeschwindigkeit erfolgen, beispielsweise um äußeren Einwirkungen Rechnung zu tragen, beispielsweise, weil die Produkte durch feuchte Witterung oder andere Temperaturen ein anderes Trennverhalten zeigen.

Die Höhenabstufungen und Abstände zwischen den einzelnen Förderbändern, also die Spalttrennschnitte, können bevorzugt mit einer Verstelleinheit flexibel eingestellt werden. Diese kann auch auf den Neigungswinkel des Förderbandes eingehen. Tests haben bereits gezeigt, dass nur eine geringe Anzahl von Verstellungen im Verlauf des Betriebes erforderlich ist, so dass diese Einstellungen jeweils manuell erfolgen können.

Als Bandbreite für die Förderbänder haben sich Breiten von etwa 1.000 mm bis 2.000 mm bewährt, andere Bandbreiten sind aber möglich. Die Bandbreite sollte im Anwendungsfall mindestens 200 mm breiter sein als die Materialaufgabe; dadurch wird eine besonders gute seitliche Führung des Stoffstromes möglich.

Die Achsabstände der Förderbänder und damit ihre Länge liegt z. B. in der Größenordnung von 1.200 mm, kann aber je nach Bedarf auch anders vorgesehen werden.

Die Umlenkrollen mit dem relativ kleinen Durchmesser an den Rollenkanten können beispielsweise Radien zwischen 5 und 12 mm besitzen.

Ein Verstopfen oder Zusetzen der Abstände zwischen den Förderbändern tritt praktisch nicht auf. Die Sortieranordnungen sind auch sehr unempfindlich gegenüber etwaigen Fehlbedienungen, die praktisch nicht zu Störungen der Anlage führen können, sondern sich lediglich auf die Genauigkeit der Trennung der Materialien auswirken. Für das Ausmaß der Höhenabstufung zwischen je zwei Förderbändern haben sich Größenordnungen um etwa 80 mm bewährt. Der Abstand zwischen je zwei Förderbändern in horizontaler Richtung kann je nach zu sortierendem Stoff zwischen einem Mindestabstand von mehr als 0 mm und 500 mm variiert werden.

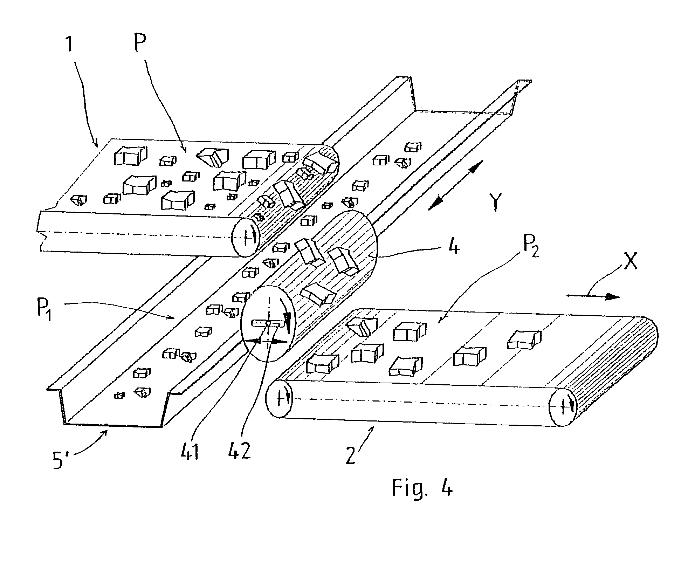

In Fig. 4 ist ein weiteres Ausführungsbeispiel der Erfindung mit zwei Förderbändern 1, 2 dargestellt. Im Gegensatz zum in Fig. 1 dargestellten Ausführungsbeispiel wird der erfindungsgemäße Trennspalt zwischen dem stromabwärtigen Ende 11 des ersten Förderbandes 1 und einer in entsprechender Höhenabstufung und mit einem horizontalen Spalt angeordneten Trommel 4 ausgebildet. Unterhalb der Trommel 4 befindet sich das zweite Förderband zum Abtransport der Partikel größerer Flächenausdehnung P₂. Unterhalb des Spaltes ist zum Abfördern der aussortierten Partikel kleinerer Größenordnung P₁ ein Rüttelförderer 5' vorgesehen.

Die Trommel 4 ist drehangetrieben mit ihrer oberen Umfangsfläche in Richtung der Förderrichtung X, wobei die Drehachse 41 horizontal im wesentlichen in Förderrichtung X in einer Verstellanordnung 42 verschiebbar 42 gehaltert ist. Durch die Verstellanordnung 42 für die drehangetriebene Trommel 4 kann der Spaltabstand problemlos variiert und damit das Sortierergebnis beeinflusst oder die Anordnung an unterschiedliches zu sortierendes Material angepasst werden, ohne dass die Förderbänder aufwendige Verstellmöglichkeiten aufweisen müssen.

Das Ausgangsmaterial kann durch unterschiedliche, insbesondere zunehmende Bandgeschwindigkeiten zusätzlich entzerrt und vereinzelt werden. Die Wendestufen begünstigen diese Vereinzelung und Auflockerung gegebenenfalls ohne eine Richtungsänderung des Materialstromes.

Rollkanten mit kleinen Durchmessern fördern die Trennung nach unterschiedlichen Korngrößen. Durch Variationen in der Spaltmaßbreite können Trennungen nach der Größe der Außenkonturen erfolgen.

Auch unterschiedlich steifes Material kann getrennt werden. Dies wird durch Steigungs- bzw. Neigungseinstellungen der Förderbänder begünstigt.

Das Abtrennen von leichteren Materialien kann durch Blasleisten zwischen den Bändern, also im Spaltbereich, unterstützt werden.

Die Spaltbänder selbst können sehr kompakt und raumsparend aufgebaut werden. Sie selbst sind beliebig konfektionierbar und können je nach den Anforderungen zusammengestellt werden. Die Wartung ist einfach und alle Bereiche sind gut zugänglich. Bei einem Verschleiß können leicht Teilstücke oder einzelne Bänder ausgewechselt werden.

### Bezugszeichenliste

- 1: Fördermittel, Förderband
- 11: stromabwärtiges Ende
- 12: Umlenkrolle
- 13: Förderebene
- 1': Rüttelförderer
- 11': stromabwärtige Kante

- 2: Fördermittel, Förderband
- 21: stromaufwärtiges Ende
- 22: Umlenkrolle
- 23: Förderebene

- 3: Fördermittel, Förderband
- 30: stromaufwärtiges Ende
- 31: stromabwärtiges Ende
- 32: Umlenkrolle
- 33: Förderebene
- 34: Mittelantrieb

- 4: Trommel
- 41: Drehachse
- 42: Verstellanordnung

- 5: weiteres Fördermittel, Förderband
- 5': Rüttelförderer

- 6: Sammelbehälter
- 61: Sammelbehälter
- 62: Sammelbehälter

- A: Abstand, Spalt
- A₁: Abstand, Spalt
- A₂: Abstand, Spalt

- H: Höhenabstufung
- H₁: Höhenabstufung
- H₂: Höhenabstufung

- P: Partikel
- P₁: Partikel
- P₂: Partikel
- P₃: Partikel

- X: Förderrichtung

- Y: Förderrichtung

## Patentansprüche

1. Sortieranordnung für Partikel (P) unterschiedlicher Größenausdehnung mit wenigstens zwei Fördermitteln (1, 2, 3), denen stromaufwärtig die zu sortierenden Partikel (P) zugeführt werden,
bei denen zwischen wenigstens zwei in Förderrichtung (X) aufeinanderfolgenden Fördermitteln eine Höhenabstufung (H) der Förderebenen vorgesehen ist,
**dadurch gekennzeichnet,**
**dass** zwischen den aufeinanderfolgenden Fördermitteln (1, 2, 3) ein horizontaler Abstand bzw. Spalt (A) vorgesehen ist, und
**dass** wenigstens eines der beiden aufeinanderfolgenden Fördermittel (1, 2, 3) ein Förderband ist.

2. Sortieranordnung nach Anspruch 1,
**dadurch gekennzeichnet,**
**dass** das stromabwärtige Fördermittel (2, 3) der aufeinanderfolgenden Fördermittel (1, 2, 3) eine höhere Fördergeschwindigkeit als das stromaufwärtige Fördermittel (1, 2) aufweist.

3. Sortieranordnung nach Anspruch 1 oder 2,
**dadurch gekennzeichnet,**
**dass** Mittel zum Einstellen der Weite des horizontalen Abstandes (A) vorgesehen sind.

4. Sortieranordnung nach Anspruch 1, 2, oder 3,
**dadurch gekennzeichnet,**
**dass** Mittel zum Einstellen der Höhenabstufung (H) vorgesehen sind.

5. Sortieranordnung nach Anspruch 1, 2, 3 oder 4,
**dadurch gekennzeichnet,**
**dass** zwischen zwei in Förderrichtung (X) aufeinanderfolgenden Fördermitteln (1, 2, 3) innerhalb der Abstufung und des Spalts wenigstens eine in Förderrichtung drehangetriebene Trommel (4) mit einer Drehachse (41) im wesentlichen senkrecht zur Förderrichtung (X) und im wesentlichen parallel zu den Förderebenen (13, 23) angeordnet ist.

6. Sortieranordnung nach Anspruch 5,
**dadurch gekennzeichnet,**
**dass** die Drehachse (41) der Trommel im wesentlichen horizontal in Förderrichtung einstellbar ist.

7. Sortieranordnung nach einem der vorangehenden Ansprüche,
**dadurch gekennzeichnet,**
**dass** die Fördermittel Förderbänder (1, 2, 3) und/oder Rüttelförderer (1') sind.

8. Sortieranordnung nach Anspruch 7
**dadurch gekennzeichnet,**
**dass** ein zu einem Spaltabstand gerichtetes Ende (11, 21, 30, 31) des Förderbandes (1, 2, 3) eine Umlenkrolle (12, 22, 32) mit einem Durchmesser hat, der kleiner gleich der Größendimension der auszusortierenden Partikel (P₁, P₂) ist.

9. Sortieranordnung nach einem der vorangehenden Ansprüche,
**dadurch gekennzeichnet,**
**dass** unterhalb des horizontalen Abstandes ein weiteres Fördermittel (5, 5') oder ein Sammelbehälter (61, 62) angeordnet ist.

10. Sortieranordnung nach Anspruch 9,
**dadurch gekennzeichnet,**
**dass** unterhalb des horizontalen Abstandes oder stromabwärtig des weiteren Fördermittels (5, 5') eine Windsichtungsvorrichtung vorgesehen ist.

11. Sortieranordnung nach einem der vorangehenden Ansprüche,
**dadurch gekennzeichnet,**
**dass** eine Vorrichtung zum Wenden der größeren Partikel im Förderstrom vorgesehen ist.

12. Sortieranordnung nach Anspruch 11,
**dadurch gekennzeichnet,**
**dass** die Vorrichtung zum Wenden eine Stufenanordnung ist.

## Claims

1. A sorting arrangement for particles (P) of differing sizes comprising at least two conveying units (1, 2, 3) to which the particles (P) requiring sorting are fed at an upstream position thereof,
wherein there is a gradation (H) in the height of the planes of conveyance between at least two successive conveying units in the direction of conveyance (X),
**characterized in that** there is provided a horizontal spacing or gap (A) between the successive conveying units (1, 2, 3) and
wherein at least one of the two successive conveying units (1, 2, 3) is a conveyor belt.

2. A sorting arrangement in accordance with Claim 1,
**characterised in that**
the downstream conveying unit (2, 3) of the successive conveying units (1, 2, 3) has a higher conveying speed than the upstream conveying unit (1, 2).

3. A sorting arrangement in accordance with Claim 1 or 2,
**characterised in that**
means are provided for adjusting the width of the horizontal spacing (A).

4. A sorting arrangement in accordance with Claim 1, 2 or 3,
**characterised in that**
means are provided for adjusting the height (H) of the gradation.

5. A sorting arrangement in accordance with Claim 1, 2, 3 or 4,
**characterised in that**
at least one drum (4), which is driven in rotary manner in the direction of conveyance and has an axis of rotation (41) that is substantially perpendicular to the direction of conveyance (X) and substantially parallel to the planes of conveyance (13, 23), is arranged within the gradation and the gap between two conveying units (1, 2, 3) that succeed one another in the direction of conveyance (X).

6. A sorting arrangement in accordance with Claim 5,
**characterised in that**
the axis of rotation (41) of the drum is adjustable substantially horizontally in the direction of conveyance.

7. A sorting arrangement in accordance with any of the preceding Claims,
**characterised in that**
the conveying units are conveyor belts (1, 2, 3) and/or vibratory conveyors (1').

8. A sorting arrangement in accordance with Claim 7,
**characterised in that**
an end (11, 21, 30, 31) of the conveyor belt (1, 2, 3) directed towards a spacing gap has a guide roller (12, 22, 32) having a diameter which is smaller than or equal to the dimensions of the particles (P1, P2) requiring sorting.

9. A sorting arrangement in accordance with any of the preceding Claims,
**characterised in that**
a further conveying unit (5, 5') or a collecting container (61, 62) is arranged below the horizontal spacing.

10. A sorting arrangement in accordance with Claim 9,
**characterised in that**
an air separation device is provided below the horizontal spacing or downstream of the further conveying unit (5, 5').

11. A sorting arrangement in accordance with any of the preceding Claims,
**characterised in that**
a device is provided for turning the larger particles in the advancing stream of material.

12. A sorting arrangement in accordance with Claim 11,
**characterised in that**
the device used for the turning process is a stepped arrangement.

## Revendications

1. Dispositif de tri pour particules (P) de dimensions différentes doté d'au moins deux moyens de transport (1, 2, 3), sur lesquels les particules (P) à trier sont acheminées vers l'amont, dans lesquels un échelonnement de la hauteur (H) des niveaux de transport est prévu entre au moins deux moyens de transport successifs dans le sens de transport (X), **caractérisé en ce que** un écart et/ou un interstice horizontal (A) est prévu entre les moyens de transport successifs (1, 2, 3), et **en ce qu'**au moins un des deux moyens de transport successifs (1, 2, 3) est un tapis transporteur.

2. Dispositif de tri selon la revendication 1, **caractérisé en ce que** le moyen de transport (2, 3) en aval des moyens de transport successifs (1, 2, 3) comporte une vitesse de transport plus élevée que le moyen de transport (1, 2) en amont.

3. Dispositif de tri selon la revendication 1 ou 2, **caractérisé en ce que** des moyens de réglage de la distance de l'écart horizontal (A) sont prévus.

4. Dispositif de tri selon la revendication 1, 2 ou 3, **caractérisé en ce que** des moyens de réglage de l'échelonnement de la hauteur (H) sont prévus.

5. Dispositif de tri selon la revendication 1, 2, 3 ou 4, **caractérisé en ce que** au moins un tambour entraîné en rotation (4) dans le sens de transport doté d'un axe de rotation (41) est installé essentiellement perpendiculairement au sens de transport (X) et essentiellement parallèlement aux niveaux de transport (13, 23) entre deux moyens de transport successifs (1, 2, 3) dans le sens de transport (X) à l'intérieur de l'échelonnement et de l'interstice.

6. Dispositif de tri selon la revendication 5, **caractérisé en ce que** l'axe de rotation (41) du tambour peut être ajusté essentiellement horizontalement dans le sens de transport.

7. Dispositif de tri selon l'une quelconque des revendications précédentes, **caractérisé en ce que** les moyens de transport sont des tapie de transport (1, 2, 3) et/ou des transporteurs vibrants (1').

8. Dispositif de tri selon la revendication 7, **caractérisé en ce que** une extrémité (11, 21, 30, 31) orientée vers un interstice du tapis de transport (1, 2, 3) dispose d'un rouleau de renvoi (12, 22, 32) ayant un diamètre qui est plus petit par rapport à la dimension des particules (P₁, P₂) à trier.

9. Dispositif de tri selon l'une quelconque des revendications précédentes, **caractérisé en ce que** un autre moyen de transport (5, 5') ou un bac collecteur (61, 62) est installé en dessous de l'écart horizontal.

10. Dispositif de tri selon la revendication 9, **caractérisé en ce que** un dispositif de séparation pneumatique est prévu en dessous de l'écart horizontal ou en aval du moyen de transport (5, 5') suivant.

11. Dispositif de tri selon l'une quelconque des revendications précédentes, **caractérisé en ce que** un dispositif de retour des particules les plus grosses dans le flux de transport est prévu.

12. Dispositif de tri selon la revendication 11, **caractérisé en ce que** le dispositif de retour est une installation à étages.
